# EUROPEAN PATENT SPECIFICATION

(11) **EP 2 730 131 B1**
(45) Date of publication and mention of the grant of the patent: **13.09.2017**
(21) Application number: 12758886.1
(22) Date of filing: 06.07.2012
(51) Int. Cl.: H04W 88/08, H04W 48/16, H04W 84/04, H04W 36/00, H04W 52/02

(54) **METHODS AND APPARATUSES FOR DISCOVERING A SMALL CELL IN A HETEROGONOUS COMMUNICATION NETWORK**
VERFAHREN UND VORRICHTUNGEN ZUM ERKENNEN EINER KLEINEN ZELLE IN EINEM HETEROGENEN KOMMUNIKATIONSNETZ
PROCÉDÉS ET APPAREILS PERMETTANT DE DÉCOUVRIR UNE PETITE CELLULE DANS UN RÉSEAU DE COMMUNICATION HÉTÉROGÈNE

(30) Priority: 07.07.2011 CN 201110190014
(43) Date of publication of application: 14.05.2014
(73) Proprietor: ALCATEL LUCENT, 92100 Boulogne-Billancourt (FR)
(72) Inventor: ZHONG, Chongxian, Shanghai 201206 (CN); WEN, Pingping, Shanghai 201206 (CN); ZOU, Jialin, Randolph, New Jersey 07869 (US); YANG, Tao, Shanghai 201206 (CN)
(74) Representative: Wetzel, Emmanuelle
(86) International application number: PCT/IB2012/001443
(87) International publication number: WO 2013/005105

(56) References cited:
- EP-A1- 2 120 369
- WO-A2-2010/064803
- DE-U1- 20 310 113
- US-A1- 2011 149 878
- ALCATEL-LUCENT ET AL: "On Network-Assisted Pico Cell Discovery in LTE HetNets", 3GPP DRAFT; R2-114362_NETWORK-ASSISTED_PICO_CELL_DISCO VERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20110822, 16 August 2011 (2011-08-16), XP050540070, [retrieved on 2011-08-16]

## Description

### Field of the invention

The present invention relates to a heterogonous communication network (HetNet) and particularly to a method and apparatus for discovering a small cell in a heterogonous communication network.

### Background of the invention

An existing solution to discover/identify a cell for a Closed Subscriber Group (CGS) is based on an Autonomous Search Function (ASF) and a proximity indication mechanism with one of important goals for reducing power consumption of a user equipment. In this solution, a white list is stored at the user equipment side and includes cell IDs of a limited number of CGS cells associated therewith. Also there stores in the user equipment information of the limited number of CGS cells associated therewith, e.g., location range information, radio fingerprint information, etc. The user equipment determines whether the user equipment approaches one or more of the CGS cells in its white list according to the stored location range information of the limited number of CGS cells associated therewith, the estimated position information of the user equipment, etc., and if so, then a search is triggered to search for all the CGS cells in the white list periodically. During the search, the user equipment determines the cell with the strongest measured signal strength in the white list as a target CGS cell and transmits an approach indication to a macro base station to trigger the macro base station to prepare for a handover, wherein the approach indication includes a cell ID of the target CGS cell.

EP 2120 369 A1 discloses a method for saving power of a user equipment.

The existing method of discovering/identifying a CGS cell is based upon such a fact that the user equipment is associated only with a limited number of CGS cells. Thus the user equipment can memorize the information of the CGS cells associated therewith, e.g., location information, radio fingerprint information, etc. However, since the number of public pico cells is tremendous, it is unlikely for the user equipment to store the information of all these public pico cells, so the existing solution of discovering a CGS cell is not applicable to the discovering/identifying of a public pico cell.

At the present, a public pico cell is discovered/identified merely by an exhaustive search, which results in considerable power consumption of the user equipment. Therefore it is desirable to provide a solution to this technical problem.

### Summary of the invention

In view of the foregoing problem, according to a first aspect of the invention, there is provided a method, in a macro base station of a heterogonous communication network, of assisting a user equipment in discovering a small cell. The method comprises the steps of: a. determining whether the user equipment has approached to a region which includes one or more small cells based upon stored location range information of all small cells in a macro cell and estimated position information of the user equipment; b. if the user equipment has approached to the region, transmitting a dedicated signaling to the user equipment to notify the user equipment that the user equipment has approached to the region, wherein the dedicated signaling includes one or more cell IDs of the one or more small cells in the region; and c. receiving from the user equipment an acknowledge indication for triggering the macro base station to prepare for a handover, and preparing the handover based upon the acknowledge indication, wherein the acknowledge indication includes a cell ID of a target small cell which is a small cell with strongest signal strength measured by the user equipment among the one or more small cells in the region.

And there is provided a method, in a user equipment of a heterogonous communication network, of discovering a small cell. The method comprises the steps of: A. receiving from a macro base station a dedicated signaling for notifying the user equipment that the user equipment has approached to a region which includes one or more small cells, wherein the dedicated signaling includes one or more cell IDs of the one or more small cells in the region; B. based upon the dedicated signaling, triggering a search to search for the one or more small cells in the region periodically; and C. transmitting an acknowledge indication to the macro base station to trigger the macro base station to prepare for a handover, wherein the acknowledge indication includes a cell ID of a target small cell which is a small cell with strongest signal strength measured by the user equipment among the one or more small cells in the region. According to an example, there is provided a
method, in a macro base station of a heterogonous communication network, of assisting a user equipment in discovering a small cell, wherein the user equipment stores cell IDs and location range information of all frequently visited small cells. The method comprises the steps of: m. determining whether the user equipment has approached to a region which includes one or more small cells based upon stored location range information of all small cells in a macro cell and estimated position information of the user equipment; n. if the user equipment has approached to the region, determining whether all the one or more small cells in the region belong to small cells frequently visited by the user equipment; o. if not, transmitting a dedicated signaling to the user equipment to notify the user equipment that the user equipment has approached to the region, wherein the dedicated signaling includes one or more cell IDs of one or more infrequently visited small cells in the region other than the small cells frequently visited by the user equipment; and p. receiving from the user equipment an acknowledge indication for triggering the macro base station to prepare for a handover, and preparing the handover based upon the acknowledge indication, wherein the acknowledge indication includes a cell ID of a target small cell which is a small cell with strongest signal strength measured by the user equipment among the one or more small cells in the region.

And there is provided an exemplary method, in a user equipment of a heterogonous communication network, of discovering a small cell, wherein the user equipment stores cell IDs and location range information of all frequently visited small cells. The method comprises the steps of: M. determining whether the user equipment has approached to one or more frequently visited small cells based upon stored location range information of the frequently visited small cells and estimated position information of the user equipment; N. if the user equipment has approached to the one or more frequently visited small cells, triggering a search to search for the all frequently visited small cells periodically; and O. transmitting an acknowledge indication to a macro base station to trigger the macro base station to prepare for a handover, wherein the acknowledge indication includes a cell ID of a target small cell which is a small cell with strongest signal strength measured by the user equipment among the all frequently visited small cells.

Optionally before the step O, the method further comprises the steps of: receiving from a macro base station a dedicated signaling for notifying the user equipment that the user equipment has approached to a region which includes one or more small cells, wherein the dedicated signaling includes one or more cell IDs of one or more infrequently visited small cells in the region other than the small cells frequently visited by the user equipment; and based upon the dedicated signaling, triggering a search to search for the one or more infrequently visited small cells in the region periodically; and wherein the step O comprises the step of: transmitting an acknowledge indication to the macro base station to trigger the macro base station to prepare for a handover, wherein the acknowledge indication includes a cell ID of a target small cell which is a small cell with strongest signal strength measured by the user equipment among the all frequently visited small cells and the one or more infrequently visited small cells in the region.

According to another example, there is provided a
method, in a user equipment of a heterogonous communication network, of discovering a small cell. The method comprises the steps of: i. determining whether the user equipment has approached to a region which includes one or more small cells based upon acquired location range information of alert zones of all small cells and estimated position information of the user equipment, wherein the alert zone of the small cell has a coverage area larger than or equal to a normal coverage area of the small cell; ii. if the user equipment has approached to the region, triggering a search to search for the one or more small cells in the region periodically; and iii. transmitting an acknowledge indication to a macro base station to trigger the macro base station to prepare for a handover, wherein the acknowledge indication includes a cell ID of a target small cell which is a small cell with strongest signal strength measured by the user equipment among the one or more small cells in the region.

And there is provided an exemplary method, in a macro base station of a heterogonous communication network, of assisting a user equipment in discovering a small cell. The method includes the steps of: I. broadcasting location range information of alert zones of all powered-on small cells in a coverage area of the macro base station, wherein the alert zone of the small cell has a coverage area larger than or equal to a normal coverage area of the small cell; and II. receiving from the user equipment an acknowledge indication for triggering the macro base station to prepare for a handover, and preparing for the handover based upon the acknowledge indication, wherein the acknowledge indication includes a cell ID of a target small cell which is a small cell with strongest signal strength measured by the user equipment among the one or more small cells in the region.

According to another example, there is provided a
method, in a user equipment of a heterogonous communication network, of discovering a small cell. The method comprises the steps of: x. receiving location range information, broadcast by a macro base station, of alert zones of all powered-on small cells in a coverage area of the macro base station, wherein the alert zone of the small cell has a coverage area larger than or equal to a normal coverage area of the small cell; and y. based upon the received location range information of the alert zones of the all powered-on small cells, triggering a search to search the all powered-on small cells in the coverage area of the macro base station periodically.

It shall be noted that the small cell in this context includes but will not be limited to a pico cell and a femto cell.

With the application of the technical solutions of the invention, a small cell in the heterogonous communication network can be discovered/identified more efficiently under the circumstance of saved power consumption of the user equipment. Furthermore the technical solution of the foregoing second aspect can further save the signaling overhead to some extent as compared with the technical solution of the foregoing first aspect.

Furthermore, in an embodiment of the invention, there is provided an apparatus, in a macro base station of a heterogonous communication network, for assisting a user equipment in discovering a small cell. The apparatus comprises: a first determining device for determining whether the user equipment has approached to a region which includes one or more small cells based upon stored location range information of all small cells in a macro cell and estimated position information of the user equipment; a first transmitting device for, if the user equipment has approached to the region, transmitting a dedicated signaling to the user equipment to notify the user equipment that the user equipment has approached to the region, wherein the dedicated signaling includes one or more cell IDs of the one or more small cells in the region; and a first receiving device for receiving from the user equipment an acknowledge indication for triggering the macro base station to prepare for a handover, and preparing the handover based upon the acknowledge indication, wherein the acknowledge indication includes a cell ID of a target small cell which is a small cell with the strongest signal strength measured by the user equipment among the one or more small cells in the region.

In an embodiment of the invention, there is provided an apparatus, in a user equipment of a heterogonous communication network, for discovering a small cell. The apparatus comprises: a second receiving device for receiving from a macro base station a dedicated signaling for notifying the user equipment that the user equipment has approached to a region which includes one or more small cells, wherein the dedicated signaling includes one or more cell IDs of the one or more small cells in the region; a first searching device for triggering a search to search for the one or more small cells in the region periodically based upon the dedicated signaling; and a second transmitting device for transmitting an acknowledge indication to the macro base station to trigger the macro base station to prepare for a handover, wherein the acknowledge indication includes a cell ID of a target small cell which is a small cell with strongest signal strength measured by the user equipment among the one or more small cells in the zone.

In another example, there is provided an
apparatus, in a macro base station of a heterogonous communication network, for assisting a user equipment in discovering a small cell, wherein the user equipment stores cell IDs and location range information of all frequently visited small cells. The apparatus comprises: a second determining device for determining whether the user equipment has approached to a region which includes one or more small cells based upon stored location range information of all small cells in a macro cell and estimated position information of the user equipment; a third determining device for, if the user equipment has approached to the region, determining whether all the one or more small cells in the region belong to small cells frequently visited by the user equipment; a third transmitting device for, if not, transmitting a dedicated signaling to the user equipment to notify the user equipment that the user equipment has approached to the region, wherein the dedicated signaling includes one or more cell IDs of one or more infrequently visited small cells in the region other than the small cells frequently visited by the user equipment; and a third receiving device for receiving from the user equipment an acknowledge indication for triggering the macro base station to prepare for a handover, and preparing the handover based upon the acknowledge indication, wherein the acknowledge indication includes a cell ID of a target small cell which is a small cell with strongest signal strength measured by the user equipment among the one or more small cells in the region.

In another example, there is provided an
apparatus, in a user equipment of a heterogonous communication network, for discovering a small cell, wherein the user equipment stores cell IDs and location range information of all frequently visited small cells. The apparatus comprises: a fourth determining device for determining whether the user equipment has approached to one or more frequently visited small cells based upon stored location range information of the frequently visited small cells and estimated position information of the user equipment; a second searching device for, if the user equipment has approached to the one or more frequently visited small cells, triggering a search to search for the all frequently visited small cells periodically; and a fourth transmitting device for transmitting an acknowledge indication to a macro base station to trigger the macro base station to prepare for a handover, wherein the acknowledge indication includes a cell ID of a target small cell which is a small cell with strongest signal strength measured by the user equipment among the all frequently visited small cells.

In another example, there is provided an
apparatus, in a user equipment of a heterogonous communication network, for discovering a small cell. The apparatus comprises: a fifth determining device for determining whether the user equipment has approached to a region which includes one or more small cells based upon acquired location range information of alert zones of all small cells and estimated position information of the user equipment, wherein the alert zone of the small cell has a coverage area larger than or equal to a normal coverage area of the small cell; a third searching device for, if the user equipment has approached to the region, triggering a search to search for the one or more small cells in the region periodically; and a fifth transmitting device for transmitting an acknowledge indication to a macro base station to trigger the macro base station to prepare for a handover, wherein the acknowledge indication includes a cell ID of a target small cell which is a small cell with strongest signal strength measured by the user equipment among the one or more small cells in the region.

In another example, there is provided an
apparatus, in a macro base station of a heterogonous communication network, for assisting a user equipment in discovering a small cell. The apparatus comprises: a broadcasting device for broadcasting location range information of alert zones of all powered-on small cells in a coverage area of the macro base station, wherein the alert zone of the small cell has a coverage area larger than or equal to a normal coverage area of the small cell; and a fourth receiving device for receiving from the user equipment an acknowledge indication for triggering the macro base station to prepare for a handover, and preparing for the handover based upon the acknowledge indication, wherein the acknowledge indication includes a cell ID of a target small cell which is a small cell with strongest signal strength measured by the user equipment among the one or more small cells in the region.

In another example, there is provided an
apparatus, in a user equipment of a heterogonous communication network, for discovering a small cell. The apparatus comprises: a fourth receiving device for receiving location range information, broadcast by a macro base station, of alert zones of all powered-on small cells in a coverage area of the macro base station, wherein the alert zone of the small cell has a coverage area larger than or equal to a normal coverage area of the small cell; and a fourth searching device for triggering a search to search the all power-on small cells in the coverage area of the macro base station periodically based upon the received location range information of the alert zones of the all powered-on small cells.

The respective aspects of the method will become more apparent from the following description of the embodiments.

### Brief description of drawings

The foregoing and other features of the invention will become more apparent from the following detailed description of the non-limiting embodiments given with reference to the drawings in which:
Fig.1 is a network topology diagram of a heterogonous communication network according to an embodiment of the invention;
Fig.2 illustrates a flow chart of a method of discovering a small cell in a heterogonous communication network according to an embodiment of a first aspect of the invention;
Fig.3 illustrates a flow chart of a method of discovering a small cell in a heterogonous communication network according to an example;
Fig.4 illustrates a flow chart of a method of discovering a small cell in a heterogonous communication network according to example;
Fig.5 is a network topology diagram of a heterogonous communication network according to another embodiment of the invention; and
Fig.6 illustrates a flow chart of a method of discovering a small cell in a heterogonous communication network according to an example. Identical or similar reference numerals denote identical or similar components throughout the drawings.

### Detailed description of embodiments

It shall be noted that the small cell in this context includes but will not be limited to a pico cell and a femto cell.

The invention will be described in details below with reference to the drawings.

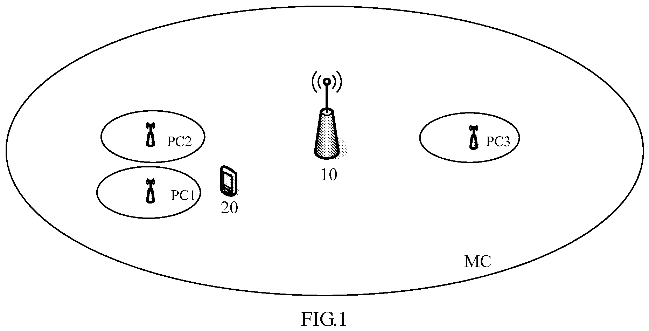

Fig.1 is a network topology diagram of a heterogonous communication network according to an embodiment of the invention. The large ellipse in the figure represents a Macro Cell, i.e., the coverage area of a macro eNodeB 10. A plurality of pico cells are deployed in the macro cell MC, for example, a pico cell PC 1, a pico cell PC2 and a pico cell PC3 illustrated as small ellipses in the figure. In the figure there is also illustrated a user equipment 20 which moves throughout the macro cell MC and thus is handed-over between the macro cell and the respective pico cells.

It shall be noted that although only three pico cells PC1, PC2 and PC3 are illustrated in the macro cell MC in Fig.1, those skilled in the art shall be appreciated that in a practical application the number of pico cells in the macro cell MC will not be limited to three, and furthermore the macro cell MC can further include a plurality of femto cells. It shall further be noted that in a practical application the number of user equipments in the macro cell MC will not be limited to one. Therefore, Fig.1 is merely for an illustrative purpose but will not limit the scope of the invention.

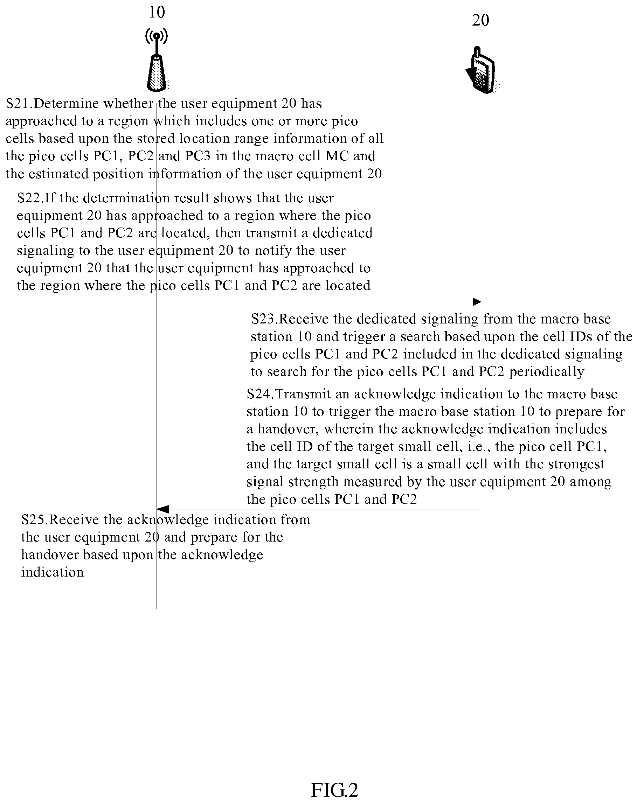

Fig.2 illustrates a flow chart of a method of discovering a small cell in a heterogonous communication network according to an embodiment of a first aspect of the invention. The method of discovering a small cell according to the first aspect of the invention will be described below with reference to Fig.2 together with Fig.1.

In this embodiment, the cell IDs, the location range information, etc., of all the pico cells PC1, PC2 and PC3 in the macro cell MC are stored in the macro base station 10. Furthermore the macro base station 10 has a capability of positioning the user equipment 20, that is, to estimate position information of the user equipment 10.

Referring to Fig.2, firstly in Step S21, the macro base station 10 determines whether the user equipment 20 has approached to a region which includes one or more pico cells based upon the stored location range information of all the pico cells PC1, PC2 and PC3 in the macro cell MC and the estimated position information of the user equipment 20. For example, the macro base station 10 can perform the step of determining periodically.

If the determination result shows that the user equipment 20 has approached to such a region, for example, the user equipment 20 has moved to approach a region where the pico cells PC1 and PC2 are located, then in Step S22, the macro base station 10 transmits a dedicated signaling to the user equipment 20 to notify the user equipment 20 that the user equipment 20 has approached to the region where the pico cells PC1 and PC2 are located, wherein the dedicated signaling includes the cell IDs of the pico cells PC1 and PC2.

Next in Step S23, the user equipment 20 receives the dedicated signaling from the macro base station 10 and triggers a search based upon the cell IDs of the pico cells PC1 and PC2 included in the dedicated signaling to search for the pico cells PC1 and PC2 periodically.

Namely" the user equipment 20 measures the strength of signals from the pico cells PC1 and PC2 periodically, for examples, measures the Reference Signal Receiving Power (RSRP), and determines the pico cell with the strongest signal strength, e.g., the pico cell PC1, as a target pico cell to be handed-over to.

Then in Step S24, the user equipment 20 transmits an acknowledge indication to the macro base station 10 to trigger the macro base station 10 to prepare for a handover, wherein the acknowledge indication includes the cell ID of the target small cell, i.e., the pico cell PC1.

Next in Step S25, the macro base station 10 receives the acknowledge indication from the user equipment 20 and prepares for the handover based upon the acknowledge indication.

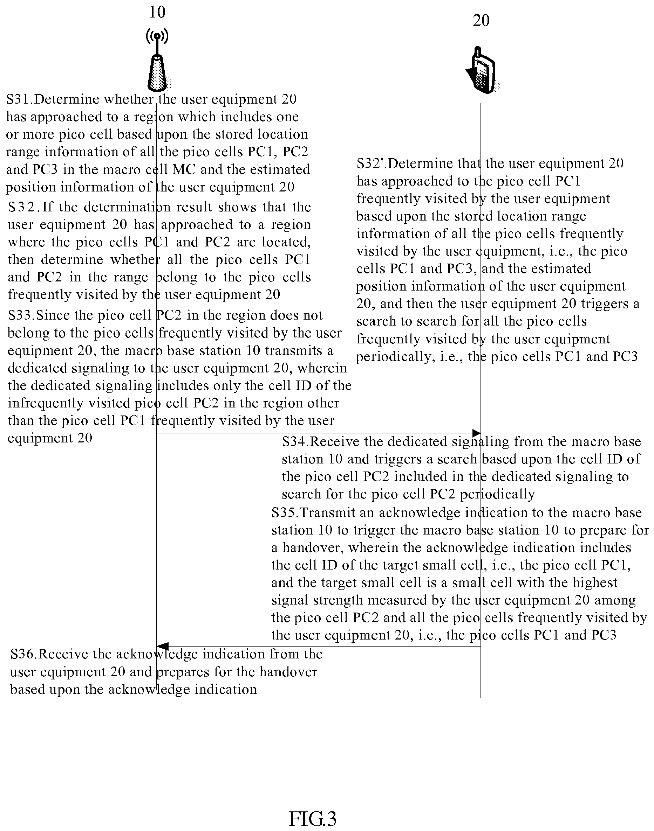

Fig.3 illustrates a flow chart of a method of discovering a small cell in a heterogonous communication network according to an example. The method of discovering a small cell
according to the example will be described below
with reference to Fig.3 together with Fig.1.

In this embodiment, at the user equipment 20 side, the cell IDs, the location range information, etc., of all pico cells that are frequently visited by the user equipment are stored in the user equipment 20. For example, the pico cell PC1 and the pico cell PC3 are pico cells that are frequently visited by the user equipment 20, and thus the cell IDs, the location range information, etc., of the pico cells PC1 and PC3 are stored in the user equipment 20. Furthermore the user equipment 20 has a capability of estimating its own position information.

At the macro base station 10 side, the macro base station 10 stores therein the cell IDs, the location range information, etc., of all the pico cells PC1, PC2 and PC3 in the macro cell MC and knows the cell IDs of the pico cells that are frequently visited by the user equipment 20.

Furthermore the macro base station 10 has a capability of positioning the user equipment 20, that is, estimating the position information of the user equipment 20.

Firstly in Step S31, the macro base station 10 determines whether the user equipment 20 has approached to a region which includes one or more pico cells based upon the stored location range information of all the pico cells PC1, PC2 and PC3 in the macro cell MC and the estimated position information of the user equipment 20. For example, the macro base station 10 can perform the step of the determining periodically.

If the determination result shows that the user equipment 20 has approached to such a region, for example, the user equipment 10 has moved to approach to a region where the pico cells PC1 and PC2 are located, then in Step S32, the macro base station 10 determines whether the pico cells PC1 and PC2 in the region belong to the pico cells that are frequently visited by the user equipment 20.

At the same time, since the user equipment 20 has moved to approach the region where the pico cells PC1 and PC2 are located, the user equipment 20 determines that the user equipment 20 has approached to the pico cell PC1 that is frequently visited by the user equipment based upon the stored location range information of all the pico cells frequently visited by the user equipment, i.e., the pico cells PC1 and PC3, and the estimated position information of the user equipment 20, and at this time in Step S32', the user equipment 20 triggers a search to search for all the pico cells that are frequently visited by the user equipment periodically, i.e., the pico cells PC1 and PC3.

At the macro base station 10 side and immediately following Step S32, in this embodiment, since the pico cell PC2 in the region does not belong to the pico cells that are frequently visited by the user equipment 20, then in Step S33, the macro base station 10 transmits a dedicated signaling to the user equipment 20, wherein the dedicated signaling includes only the cell ID of the infrequently visited pico cell PC2 in the region other than the pico cell PC1 that is frequently visited by the user equipment 20. That is to say, the macro base station 10 transmits the cell ID of the infrequently visited pico cell in the region to the user equipment 20 via the dedicated signaling.

Next in Step S34, the user equipment 20 receives the dedicated signaling from the macro base station 10 and triggers a search based upon the cell ID of the pico cell PC2 included in the dedicated signaling to search for the pico cell PC2 periodically.

Based upon the triggering of the foregoing two searches, the user equipment 20 searches for both the pico cell PC2 and all the pico cells 5 that are frequently visited by the user equipment. Namely, the user equipment 20 measures the strength of signals from the pico cell PC2 and all the pico cells that are frequently visited by the user equipment. i.e., the pico cells PC1 and PC3, for example, measures the Reference Signal Receiving Power (RSRP), and determines the pico cell with the strongest signal strength, e.g., the pico cell PC1, as a target pico cell to be handed-overto.

Then in Step S35, the user equipment 20 transmits an acknowledge indication to the macro base station 10 to trigger the macro base station 10 to prepare for a handover, wherein the acknowledge indication includes the cell ID of the target small cell, i.e., the pico cell PC1.

Next in Step S36, the macro base station 10 receives the acknowledge indication from the user equipment 20 and prepares for the handover based upon the acknowledge indication.

It is to be noted that in this embodiment, if all of the one or more pico cells included in the region to which the user equipment 20 approaches belong to the pico cells that are frequently visited by the user equipment, then the macro base station 10 will not transmit any dedicated signaling and the user equipment 20 will trigger a search automatically to search for all the pico cells that are frequently visited by the user equipment periodically.

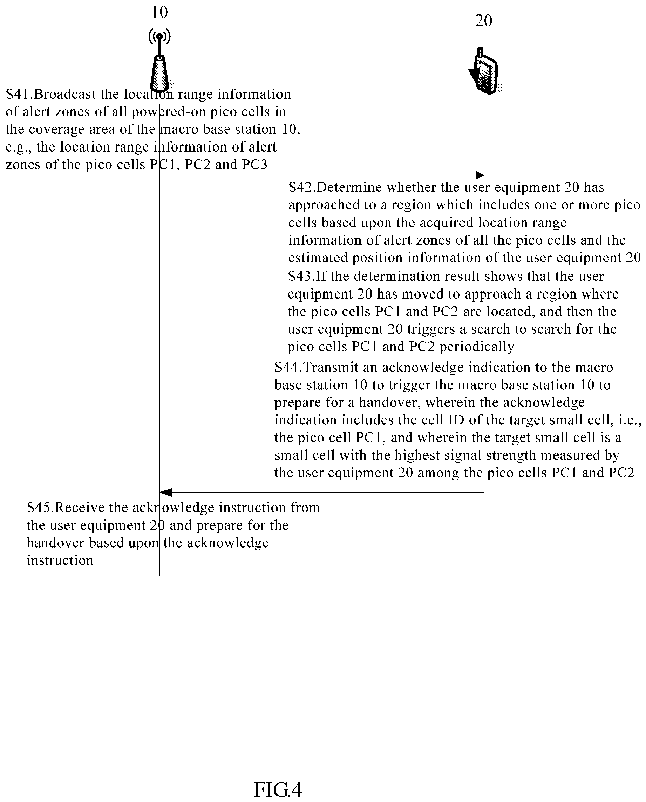

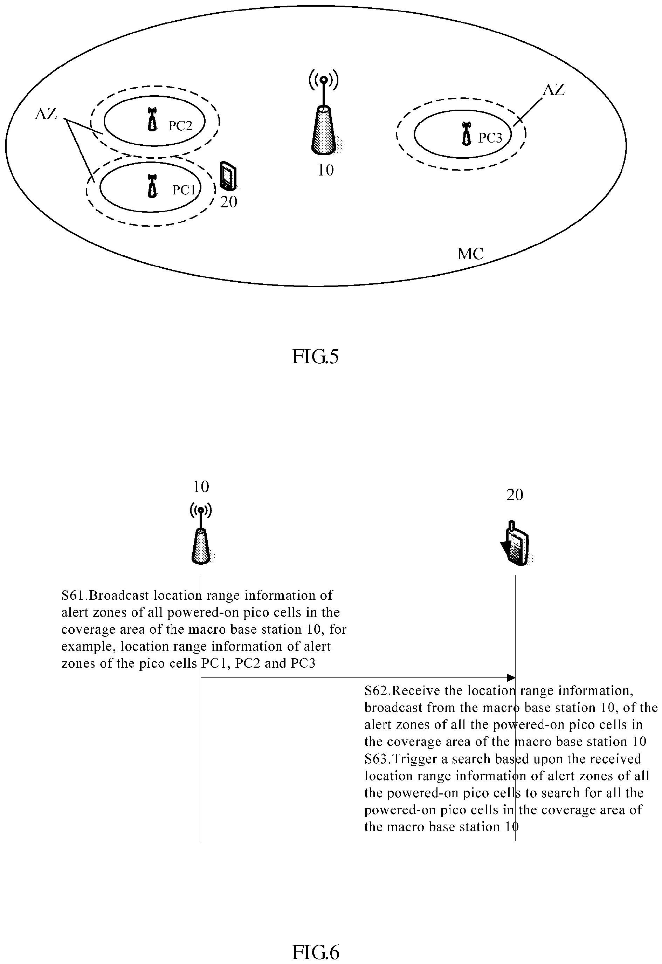

Fig.4 illustrates a flow chart of a method of discovering a small cell in a heterogonous communication network according to an embodiment of a third aspect of the invention. The method of discovering a small cell according to an example will be described below with reference to Fig.4 together with Fig.5.

In this embodiment, at the user equipment 20 side, the user equipment 20 has a capability of estimating its own position information.

Furthermore, since the user equipment 20 moves rapidly, then in this embodiment the alert zones of pico cells are set for the respective pico cells, preferably as illustrated in Fig.5, the coverage area of an alert zone of a pico cell, i.e., the area enclosed by a dotted line in Fig.5, is larger than a normal coverage area of the pico cell itself, so that the user equipment can be handed over to a certain pico cell successfully when it is in proximity to the pico cell. Of course, the coverage area of the alert zone of the pico cell can alternatively be equal to the normal coverage area of the pico cell itself.

At the macro base station 10 side, the cell IDs of all pico cells in the macro cell MC, the location range information of alert zones of these pico cells, etc., are stored in the macro base station 10. The macro base station 10 will broadcast the location range information of alert zones of respective powered-on pico cells in the macro cell MC, for example, the macro base station 10 can broadcast periodically or each time a new pico cell is powered on.

Referring to Fig.4, firstly in Step S41 the macro base station 10 broadcasts the location range information of alert zones of all powered-on pico cells in the coverage area of the macro base station 10, e.g., the location range information of alert zones of the pico cells PC1, PC2 and PC3.

Next in Step S42, the user equipment 20 determines whether the user equipment 20 has approached to a region which includes one or more pico cells based upon the acquired location range information of the alert zones of all the pico cells and the estimated position information of the user equipment 20.

If the determination result shows that the user equipment 20 has approached to such a region, for example, the user equipment 20 has moved to approach a region where the pico cells PC1 and PC2 are located, then in Step S43, the user equipment 20 triggers a search to search for the pico cells PC1 and PC2 periodically.

Namely, the user equipment 20 measures the strength of signals from the pico cells PC1 and PC2 periodically, for examples, measures the Reference Signal Receiving Power (RSRP), and determines the pico cell with the strongest signal strength, e.g., the pico cell PC1, as a target pico cell to be handed-overto.

Then in Step S44, the user equipment 20 transmits an acknowledge indication to the macro base station 10 to trigger the macro base station 10 to prepare for a handover, wherein the acknowledge indication includes the cell ID of the target pico cell, i.e., the pico cell PC1.

Next in Step S45, the macro base station 10 receives the acknowledge instruction from the user equipment 20 and prepares for the handover based upon the acknowledge instruction.

It shall be noted that in an alternative embodiment, the respective pico cells can broadcast by themselves the location range information of their alert zones.

Fig.6 illustrates a flow chart of a method of discovering a small cell in a heterogonous communication network according to an embodiment of a fourth aspect of the invention. The method of discovering a small cell according to an example will be described below
with reference to Fig.6 together with Fig.5.

In this embodiment, at the user equipment 20 side, the user equipment 20 has no capability of estimating its own position information or can not estimate its own position information accurately or cannot estimate its own position information in a power saving manner, and thus the user equipment 20 cannot discover/identify a pico cell in the same way as in the embodiment according to the forgoing third aspect.

In this embodiment, referring to Fig.6, firstly in Step S61, the macro base station 10 broadcasts the location range information of alert zones of all powered-on pico cells in the coverage area of the macro base station 10, for example, the location range information of alert zones of the pico cells PC1, PC2 and PC3.

Next in Step S62, the user equipment 20 receives the location range information, broadcast from the macro base station 10, of alert zones of all powered-on pico cells in the coverage area of the macro base station 10.

Next in Step S63, the user equipment 20 triggers a search based upon the received location range information of alert zones of all powered-on pico cells to search for all powered-on pico cells in the coverage area of the macro base station 10.

In this embodiment, the user equipment 20 will trigger the search only upon reception of the location range information, broadcast from the macro base station, of alert zones of the pico cells, that is, when the user equipment 20 enters a macro cell where no small cell, e.g., a pico cell, a femto cell, etc., is deployed, a macro base station in the macro cell will not broadcast any location range information of an alert zone, therefore the user equipment 20 will not trigger any search, thereby saving power consumption of the user equipment 20 to some extent.

It will be apparent to those skilled in the art shall appreciate that the invention will not be limited to the details of the foregoing exemplary embodiments and the invention can be embodied in other specific forms.

Therefore the
embodiments shall be construed to be illustrated but not limiting in any respect, and any reference numerals in the claims shall not be construed as limiting the claims in question. Furthermore it will be apparent that the term "comprising" will not preclude another element(s) or step(s), and the term "a" or "an" preceding an element will not preclude presence of "a plural of" such elements. A plurality of elements stated in a product claim can also be embodied in software or hardware as an element. The terms "first", "second", etc., are intended to represent a name but not to suggest any specific order.

## Claims

1. A method, in a macro base station (10) of a heterogonous communication network, of assisting a user equipment (20) in discovering a small cell, wherein the method comprises the steps of:
a. determining whether the user equipment (20) has approached to a region which includes one or more small cells based upon stored location range information of all small cells in a macro cell (MC) and estimated position information of the user equipment (20);
b. if the user equipment (20) has approached to the region, transmitting a dedicated signaling to the user equipment (20) to notify the user equipment (20) that the user equipment (20) has approached to the region, wherein the dedicated signaling includes one or more cell IDs of the one or more small cells in the region; and
c. receiving from the user equipment (20) an acknowledge indication for triggering the macro base station (10) to prepare for a handover, and preparing the handover based upon the acknowledge indication, wherein the acknowledge indication includes a cell ID of a target small cell which is a small cell with strongest signal strength measured by the user equipment (20) among the one or more small cells in the region.

2. A method, in a user equipment (20) of a heterogonous communication network, of discovering a small cell, wherein the method comprises the steps of:
A. receiving from a macro base station (10) a dedicated signaling for notifying the user equipment (20) that the user equipment (20) has approached to a region which includes one or more small cells, wherein the dedicated signaling includes one or more cell IDs of the one or more small cells in the region;
B. based upon the dedicated signaling, triggering a search to search for the one or more small cells in the region periodically; and
C. transmitting an acknowledge indication to the macro base station (10) to trigger the macro base station (10) to prepare for a handover, wherein the acknowledge indication includes a cell ID of a target small cell which is a small cell with strongest signal strength measured by the user equipment (20) among the one or more small cells in the region.

3. An apparatus, in a macro base station (10) of a heterogonous communication network, for assisting a user equipment (20) in discovering a small cell, wherein the apparatus comprises:
a first determining device for determining whether the user equipment (20) has approached to a region which includes one or more small cells based upon stored location range information of all small cells in a macro cell (MC) and estimated position information of the user equipment (20);
a first transmitting device for, if the user equipment (20) has approached to the region, transmitting a dedicated signaling to the user equipment (20) to notify the user equipment (20) that the user equipment (20) has approached to the region, wherein the dedicated signaling includes one or more cell IDs of the one or more small cells in the region; and
a first receiving device for receiving from the user equipment (20) an acknowledge indication for triggering the macro base station (10) to prepare for a handover, and preparing the handover based upon the acknowledge indication, wherein the acknowledge indication includes a cell ID of a target small cell which is a small cell with the strongest signal strength measured by the user equipment (20) among the one or more small cells in the region.

4. An apparatus, in a user equipment (20) of a heterogonous communication network, for discovering a small cell, wherein the apparatus comprises:
a second receiving device for receiving from a macro base station (10) a dedicated signaling for notifying the user equipment (20) that the user equipment (20) has approached to a region which includes one or more small cells, wherein the dedicated signaling includes one or more cell IDs of the one or more small cells in the region; a first searching device for triggering a search to search for the one or more small cells in the region periodically based upon the dedicated signaling; and
a second transmitting device for transmitting an acknowledge indication to the macro base station (10) to trigger the macro base station (10) to prepare for a handover, wherein the acknowledge indication includes a cell ID of a target small cell which is a small cell with strongest signal strength measured by the user equipment (20) among the one or more small cells in the zone.

## Patentansprüche

1. Verfahren in einer Makro-Basisstation (10) eines heterogenen Kommunikationsnetzwerks zum Unterstützen eines Teilnehmergeräts (20) beim Entdecken einer kleinen Zelle, wobei das Verfahren die folgenden Schritte umfasst:
a. Bestimmen, ob das Teilnehmergerät (20) sich einem Bereich angenähert hat, welcher eine oder mehrere kleine Zellen einschließt, auf Grundlage gespeicherter Standortbereichsinformation aller kleinen Zellen in einer Makrozelle (MC) und der geschätzten Positionsinformation des Teilnehmergeräts (20);
b. wenn das Teilnehmergerät (20) sich dem Bereich genähert hat, Übertragen einer dedizierten Signalisierung auf das Teilnehmergerät (20), um dem Teilnehmergerät (20) mitzuteilen, dass das Teilnehmergerät (20) sich dem Bereich genähert hat, wobei die dedizierte Signalisierung eine oder mehrere Zell-IDs der einen oder der mehreren kleinen Zellen des Bereichs einschließt; und
c. Empfangen von dem Teilnehmergerät (20) einer Bestätigungsanzeige zum Auslösen der Makro-Basisstation (10) zum Vorbereiten für ein Handover, und Vorbereiten des Handover auf Grundlage der Bestätigungsanzeige, wobei die Bestätigungsanzeige eine Zell-ID der kleinen Zielzelle einschließt, welche eine kleine Zelle mit der höchsten Signalstärke ist, die von dem Teilnehmergerät (20) bei der einen oder den mehreren kleinen Zellen in dem Bereich gemessen wurde.

2. Verfahren in einem Teilnehmergerät (20) eines heterogenen Kommunikationsnetzwerks zum Entdecken einer kleinen Zelle, wobei das Verfahren die folgenden Schritte umfasst:
A. Empfangen von einer Makro-Basisstation (10) einer dedizierten Signalisierung zum Mitteilen an das Teilnehmergerät (20), dass sich das Teilnehmergerät (20) einem Bereich genähert hat, welcher eine oder mehrere kleine Zellen einschließt, wobei die dedizierte Signalisierung eine oder mehrere Zell-IDs der einen oder der mehreren kleinen Zellen in dem Bereich einschließt;
B. auf Grundlage der dedizierten Signalisierung, Auslösen einer Suche zum periodischen Suchen nach der einen oder der mehreren kleinen Zelle in dem Bereich; und
C. Übertragen einer Bestätigungsanzeige auf die Makro-Basisstation (10) zum Auslösen der Makro-Basisstation (10) zum Vorbereiten für ein Handover, wobei die Bestätigungsanzeige eine Zell-ID der kleinen Zielzelle einschließt, welche eine kleine Zelle mit der höchsten Signalstärke ist, die von dem Teilnehmergerät (20) bei der einen oder den mehreren kleinen Zellen in dem Bereich gemessen wurde.

3. Vorrichtung in einer Makro-Basisstation (10) eines heterogenen Kommunikationsnetzwerks zum Unterstützen eines Teilnehmergeräts (20) beim Entdecken einer kleinen Zelle, wobei die Vorrichtung umfasst:
eine erste Bestimmungsvorrichtung zum Bestimmen, ob das Teilnehmergerät (20) sich einem Bereich angenähert hat, welcher eine oder mehrere kleine Zellen einschließt, auf Grundlage gespeicherter Standortbereichsinformation aller kleinen Zellen in einer Makrozelle (MC) und der geschätzten Positionsinformation des Teilnehmergeräts (20);
eine erste Übertragungsvorrichtung zum Übertragen, wenn das Teilnehmergerät (20) sich dem Bereich genähert hat, einer dedizierten Signalisierung auf das Teilnehmergerät (20), um dem Teilnehmergerät (20) mitzuteilen, dass das Teilnehmergerät (20) sich dem Bereich genähert hat, wobei die dedizierte Signalisierung eine oder mehrere Zell-IDs der einen oder der mehreren kleinen Zellen des Bereichs einschließt; und
eine erste Empfangsvorrichtung zum Empfangen von dem Teilnehmergerät (20) einer Bestätigungsanzeige zum Auslösen der Makro-Basisstation (10) zum Vorbereiten für ein Handover, und Vorbereiten des Handover auf Grundlage der Bestätigungsanzeige, wobei die Bestätigungsanzeige eine Zell-ID der kleinen Zielzelle einschließt, welche eine kleine Zelle mit der höchsten Signalstärke ist, die von dem Teilnehmergerät (20) bei der einen oder den mehreren kleinen Zellen in dem Bereich gemessen wurde.

4. Vorrichtung in einem Teilnehmergerät (20) eines heterogenen Kommunikationsnetzwerks zum Entdecken einer kleinen Zelle, wobei die Vorrichtung umfasst:
eine zweite Empfangsvorrichtung zum Empfangen von einer Makro-Basisstation (10) einer dedizierten Signalisierung zum Mitteilen an das Teilnehmergerät (20), dass sich das Teilnehmergerät (20) einem Bereich genähert hat, welcher eine oder mehrere kleine Zellen einschließt, wobei die dedizierte Signalisierung eine oder mehrere Zell-IDs der einen oder der mehreren kleinen Zellen in dem Bereich;
eine erste Suchvorrichtung zum Auslösen einer Suche zum periodischen Suchen der einen oder mehreren kleinen Zellen in dem Bereich auf Grundlage der dedizierten Signalisierung; und
eine zweite Übertragungsvorrichtung zum Übertragen einer Bestätigungsanzeige auf die Makro-Basisstation (10) zum Auslösen der Makro-Basisstation (10) zum Vorbereiten für ein Handover, wobei die Bestätigungsanzeige eine Zell-ID der kleinen Zielzelle einschließt, welche eine kleine Zelle mit der höchsten Signalstärke ist, die von dem Teilnehmergerät (20) bei der einen oder den mehreren kleinen Zellen in dem Bereich gemessen wurde.

## Revendications

1. Procédé, dans une station de base macro (10) d'un réseau de communication hétérogène, destiné à aider un équipement d'utilisateur (20) à découvrir une petite cellule, le procédé comprenant les étapes suivantes :
a. déterminer si l'équipement d'utilisateur (20) s'est approché d'une zone qui contient une ou plusieurs petites cellules d'après les informations de plage de localisation stockées de toutes les petites cellules dans une macro cellule (MC) et les informations de position estimée de l'équipement d'utilisateur (20) ;
b. si l'équipement d'utilisateur (20) s'est approché de la zone, transmettre une signalisation dédiée à l'équipement d'utilisateur (20) afin de notifier à l'équipement d'utilisateur (20) que l'équipement d'utilisateur (20) s'est approché de la zone, la signalisation dédiée contenant un ou plusieurs identificateurs de cellule de la ou des petites cellules de la zone ; et
c. recevoir en provenance de l'équipement d'utilisateur (20) une indication d'accusé de réception pour déclencher la préparation de la station de base macro (10) à un transfert intercellulaire, l'indication d'accusé de réception contenant un identificateur de cellule d'une petite cellule cible qui est la petite cellule ayant la plus forte intensité de signal mesurée par l'équipement d'utilisateur (20) parmi la ou les petites cellules de la zone.

2. Procédé, dans un équipement d'utilisateur (20) d'un réseau de communication hétérogène, destiné à découvrir une petite cellule, le procédé comprenant les étapes suivantes :
A. recevoir en provenance d'une station de base macro (10) une signalisation dédiée destinée à notifier l'équipement d'utilisateur (20) que l'équipement d'utilisateur (20) s'est approché d'une zone qui contient une ou plusieurs petites cellules, la signalisation dédiée contenant un ou plusieurs identificateurs de cellule de la ou des petites cellules de la zone ;
B. d'après la signalisation dédiée, déclencher une recherche pour rechercher la ou les petites cellules périodiquement dans la zone ; et
C. transmettre une indication d'accusé de réception à la station de base macro (10) afin de déclencher la préparation de la station de base macro (10) à un transfert intercellulaire, l'indication d'accusé de réception contenant un identificateur de cellule d'une petite cellule cible qui est la petite cellule ayant la plus forte intensité de signal mesurée par l'équipement d'utilisateur (20) parmi la ou les petites cellules de la zone.

3. Appareil, dans une station de base macro (10) d'un réseau de communication hétérogène, destiné à aider un équipement d'utilisateur (20) à découvrir une petite cellule, l'appareil comprenant :
un premier dispositif de détermination destiné à déterminer si l'équipement d'utilisateur (20) s'est approché d'une zone qui contient une ou plusieurs petites cellules d'après les informations de plage de localisation stockées de toutes les petites cellules dans une macro cellule (MC) et les informations de position estimée de l'équipement d'utilisateur (20) ;
un premier dispositif de transmission destiné à, si l'équipement d'utilisateur (20) s'est approché de la zone, transmettre une signalisation dédiée à l'équipement d'utilisateur (20) afin de notifier à l'équipement d'utilisateur (20) que l'équipement d'utilisateur (20) s'est approché de la zone, la signalisation dédiée contenant un ou plusieurs identificateurs de cellule de la ou des petites cellules de la zone ; et
un premier dispositif de réception destiné à recevoir en provenance de l'équipement d'utilisateur (20) une indication d'accusé de réception destinée à déclencher la préparation de la station de base macro (10) à un transfert intercellulaire, l'indication d'accusé de réception contenant un identificateur de cellule de la petite cellule cible qui est la petite cellule ayant la plus forte intensité de signal mesurée par l'équipement d'utilisateur (20) parmi la ou les petites cellules de la zone.

4. Appareil, dans un équipement d'utilisateur (20) d'un réseau de communication hétérogène, destiné à découvrir une petite cellule, l'appareil comprenant :
un deuxième dispositif de réception destiné à recevoir en provenance d'une station de base macro (10) une signalisation dédiée destinée à notifier l'équipement d'utilisateur (20) que l'équipement d'utilisateur (20) s'est approché d'une zone qui contient une ou plusieurs petites cellules, la signalisation dédiée contenant un ou plusieurs identificateurs de cellule de la ou des petites cellules de la zone ;
un premier dispositif de recherche destiné à déclencher une recherche pour rechercher la ou les petites cellules périodiquement dans la zone d'après la signalisation dédiée ; et
un deuxième dispositif de transmission destiné à transmettre une indication d'accusé de réception à la station de base macro (10) afin de déclencher la préparation de la station de base macro (10) à un transfert intercellulaire, l'indication d'accusé de réception contenant un identificateur de cellule d'une petite cellule cible qui est la petite cellule ayant la plus forte intensité de signal mesurée par l'équipement d'utilisateur (20) parmi la ou les petites cellules de la zone.
